Europäisches Patentamt

European Patent Office

Office européen des brevets

(11) Veröffentlichungsnummer : **0 185 844**
B1

(19)

(12)     **EUROPÄISCHE PATENTSCHRIFT**

(45) Veröffentlichungstag der Patentschrift :
02.11.89

(51) Int. Cl.⁴ : **G 11 B    5/53**

(21) Anmeldenummer : **85110321.8**

(22) Anmeldetag : **16.08.85**

(54) **Kopfträger mit Magnetkopf.**

(30) Priorität : **20.12.84 DE 3446446**

(43) Veröffentlichungstag der Anmeldung :
**02.07.86 Patentblatt 86/27**

(45) Bekanntmachung des Hinweises auf die Patenterteilung : **02.11.89 Patentblatt 89/44**

(84) Benannte Vertragsstaaten :
**DE FR GB IT**

(56) Entgegenhaltungen :
**AT—B—    370 253**
**DE—B— 1 909 245**
**US—A— 3 772 666**

(73) Patentinhaber : **GRUNDIG E.M.V. Elektro-Mechanische Versuchsanstalt Max Grundig holländ. Stiftung & Co. KG.**
**Kurgartenstrasse 37**
**D-8510 Fürth/Bay. (DE)**

(72) Erfinder : **Köpnick, Klaus-Jürgen**
**Königsberger Strasse 42**
**D-8510 Fürth/Bayern (DE)**

## Beschreibung

Die Erfindung betrifft einen Kopfträger und deren Befestigung auf einer rotierenden Trägerscheibe eines Video-Magnetbandgerätes.

Es ist bekannt, daß Magnetköpfe, insbesondere sehr kleine Magnetköpfe, wie sie z. B. in Form von Videoköpfen verwendet werden, auf einem Kopfträger befestigt sind. Über den Kopfträger kann der Magnetkopf in die erforderliche Lage zum Magnetband einjustiert werden. Bei einem Videogerät nach bekannter Aufzeichnungstechnik ist der Kopfträger mit Magnetkopf auf einer rotierenden Kopfträgerscheibe montiert. Der Kopfträger mit Magnetkopf ist hierbei mit der Kopfscheibe verbunden. Weiterhin ist mittels einer Spurhöhenschraube die Lage des Magnetkopfes in die vom Magnetband vorgegebene Spurlage einzustellen.

Eine derartige Befestigung is aus der AT-B-370 253 bekannt. Diese Art der Befestigung des Kopfträgers mit Magnetkopf auf der Kopfträgerscheibe ist aufwendig und erfordert in jedem Falle eine ebenfalls aufwendige Seiten-Höhenjustierung des Magnetkopfes.

Aufgabe der Erfindung ist es daher, diesen Nachteil zu beseitigen und eine Befestigungsart für den Kopfträger auf der Trägerscheibe zu schaffen, die einfacher ist als die bekannte Befestigungsweise, und die den zusätzlichen Justieraufwand des Magnetkopfes auf der Kopfträgerscheibe weitgehendst vermeidet.

Diese Aufgabe wird gemäß der Erfindung durch die kennzeichnenden Merkmale des Anspruchs 1 gelöst.

Die Erfindung wird nachfolgend anhand der Zeichnungen näher erläutert.

Fig. 1 ist eine schematische Darstellung der bisher bekannten Art zur Befestigung und Justierung eines Kopfträgers mit Magnetkopf auf einer Trägerscheibe,

Fig. 2 ist eine Schnittdarstellung der Figur 1,

Fig. 3 ist eine schematische Darstellung einer erfindungsgemäßen Anordnung eines Kopfträgers mit Magnetkopf auf einer Trägerscheibe,

Fig. 4 ist eine Schnittdarstellung der Figur 3 und

Fig. 5 ist eine schematische Darstellung ähnlich der Figur 3, jedoch mit Ausklinkungen am Kopfträger.

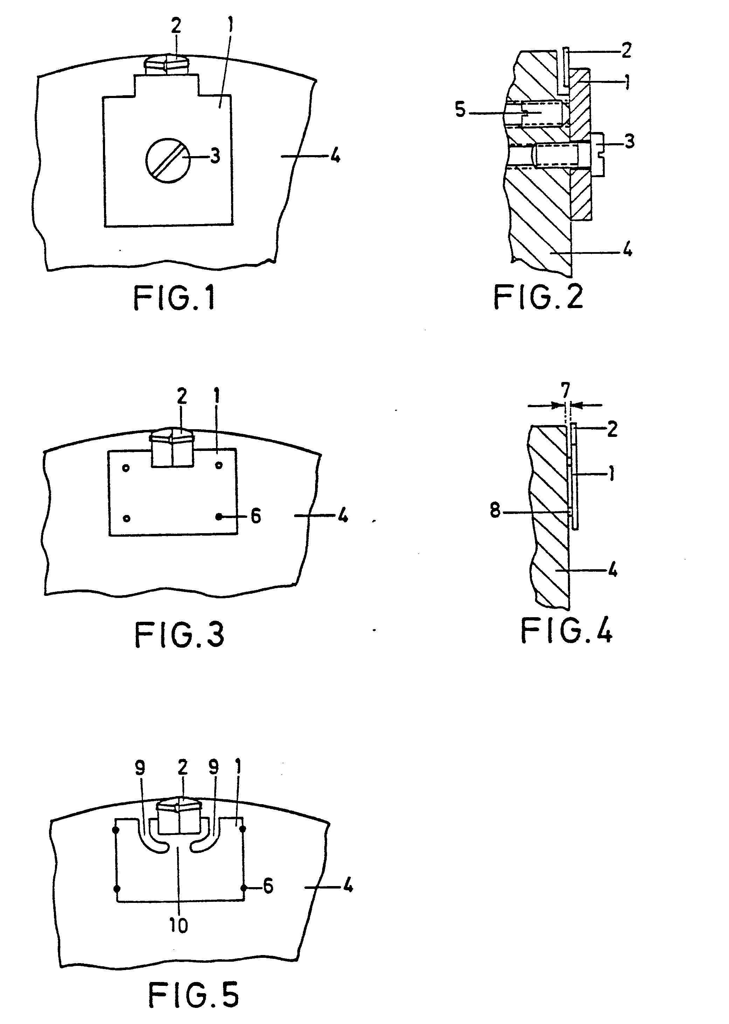

Die Figur 1 und 2 zeigt eine bekannte Lösung zur Befestigung eines Kopfträgers 1 mit Magnetkopf 2 mittels einer Befestigungsschraube 3 auf einer Trägerscheibe 4. Der Magnetkopf ist hierbei auf der Unterseite des Kopfträgers aufgeklebt, und die Trägerscheibe weist an dieser Stelle eine Ausnehmung auf. Die erforderliche Kopfeinstellung wird über die in der Trägerscheibe eingeschraubte Spurhöhenschraube 5 vorgenommen.

Die Figur 3 zeigt eine Lösung zur Befestigung des Magnetkopfes 2, der nach der dargestellten Zeichnung in eine Ausklinkung am Kopfträger eingefügt und mit dem Kopfträger verklebt ist. Der Kopfträger 1 ist beispielsweise an vier Stellen durch eine Laser-Schweißung 6 mit der Trägerscheibe 4 verschweißt.

Aus der Figur 4 ist zu erkennen, daß der Kopfträger 1 mit eingesetztem Magnetkopf 2 einen Abstand 7 zur Trägerscheibe 4 aufweist. Der erforderliche Abstand zwischen Magnetkopf bzw. Kopfträger und Trägerscheibe wird durch Auswertung der Fertigungs- und Montagemaße von Einzelteilen bzw. Baugruppen der zu montierenden Teile über einen Rechner und eine Einstellvorrichtung ermittelt und in der Schweiß-Vorrichtung eingestellt.

Es ist vorteilhaft, daß die Laser-Schweißung aus drei oder vier einzelnen Schweißpunkten besteht, wobei sich an den Schweißstellen durch Materialabschmelzung eine Schweißkuppe 8 bildet, die den vorgegebenen Abstand zwischen Kopfträger und Trägerscheibe gewährleistet. Die Laserschweißung kann auch in Form einer z. B. hufeisenförmigen Schweißlinie vorgenommen werden. Es entsteht dann zwischen Kopfträger und Trägerscheibe an der Schweißlinie eine Schweißwulst, die die beiden Teile verbindet.

Die Figur 5 zeigt ein Ausführungsbeispiel, bei dem die Laser-Schweißung an den Rand des Kopfträgers 1 gesetzt ist, und der Kopfträger 1 im rückwärtigen Bereich des Magnetkopfes 2 beidseitig Ausklinkungen 9 aufweist. Über einen zwischen den Ausklinkungen 9 verbleibenden Steg 10 kann der Magnetkopf in seiner Höhen- und Seitenlage bedarfsweise über den bereits vorgegebenen Abstand 7 hinaus verändert werden. Die Ausklinkung kann auch andere zweckdienliche Formen aufweisen.

## Patentansprüche

1. Kopfträger mit Magnetkopf un deren Befestigung auf einer rotierenden Trägerscheibe eines Video-Magnetbandgerätes wobei der Kopfträger (1) einen geringen axialen Abstand (7) gegenüber der Trägerscheibe (4) aufweist, dadurch gekennzeichnet, daß der Kopfträger (1) mit Magnetkopf (2) mit der Trägerscheibe (4) in einer vorgegebenen Lage durch Laser-Schweißung (6) formschlüssig verbunden ist, daß die Laser-Schweißung (6) aus — vorzugsweise drei bzw. vier — einzelnen Schweißpunkten oder einer Schweißlinie besteht, und daß die Schweißstellen durch Materialabschmelzung Schweißkuppen (8) bzw. einen Schweißwulst aufweisen, die den vorgegebenen Abstand zwischen Kopfträger und Trägerscheibe bilden.

2. Kopfträge nach Anspruch 1, dadurch gekennzeichnet, daß der Kopfträger im rückwärtigen Bereich des Magnetkopfes beidseitig Ausklinkungen aufweist.

## Claims

1. Head support with magnetic head and its fastening on a rotating support disc of a video magnetic tape recorder, the head support (1) having a small axial distance (7) with respect to the support disc (4), characterized in that the head support (1) with magnetic head (2) is positively connected to the support disc (4) in a predetermined position by laser welding (6), in that the laser welding (6) consists of — preferably three or four — individual welding points or a welding line, and in that the welding points have, due to material melting, welds (8) or a welding bead which form the predetermined distance between head support and support disc.

2. Head supports according to Claim 1, characterized in that the head support has in the rear region of the magnetic head notches on both sides.

**Revendications**

1. Porte-tête comportant une tête magnétique et son dispositif de fixation sur un disque rotatif de support d'un magnétoscope, le porte-tête (1) étant séparé du disque de support (4) par une faible distance axiale (7), caractérisé par le fait que le porte-tête (1) muni d'une tête magnétique (2) est relié au disque de support (4), dans une position prédéterminée, selon une liaison de forme au moyen d'une soudure (6) faite au laser, que la soudure (6) faite au laser est formée de préférence par trois ou quatre points individuels de soudure ou par un cordon de soudure, et que les points de soudure comportent, sous l'effet de la fusion du matériau, des boutons de soudure (8) ou un rebord de soudure, qui déterminent la distance prédéterminée entre le porte-tête et le disque de support.

2. Porte-tête selon la revendication 1, caractérisé en ce qu'il possède des encoches, sur ses deux côtés, dans la partie arrière de la tête magnétique.

FIG.1

FIG.2

FIG.3

FIG.4

FIG.5